# EUROPEAN PATENT APPLICATION

(11) **EP 3 065 360 A1**
(43) Date of publication of application: **07.09.2016**
(21) Application number: 14858550.8
(22) Date of filing: 25.06.2014
(51) Int. Cl.: H04L 12/801, H04L 29/06

(54) **TRAFFIC CLEANING METHOD AND DEVICE, AND COMPUTER STORAGE MEDIUM**

(30) Priority: 30.10.2013 CN 201310529457
(71) Applicant: ZTE Corporation, Shenzhen, Guangdong 518057 (CN)
(72) Inventor: HUANG, Sunliang, Shenzhen Guangdong 518057 (CN); FENG, Jun, Shenzhen Guangdong 518057 (CN); FAN, Liang, Shenzhen Guangdong 518057 (CN)
(74) Representative: Regimbeau
(86) International application number: PCT/CN2014/080768
(87) International publication number: WO 2015/062295

(57) **Abstract**

The present disclosure provides a traffic cleaning method and device, and a computer storage medium. The method includes: a policy controller of a traffic cleaning system sending a traffic guide policy, which instructs an SDN controller to redirect a designated traffic to a traffic cleaner of the traffic cleaning system to conduct traffic cleaning, to the SDN controller; and the traffic cleaner receiving the designated traffic which is uploaded by a network device according to an instruction of the SDN controller.

## Description

### Technical Field

The present disclosure relates to a technical field of communications, and particularly to a software defined network-based traffic cleaning method and device, and a computer storage medium.

### Background

With rapid development of Internet, Internet services are continuously enriched, but Internet viruses and Internet attacks also continuously appear. Thus, security issue of Internet has become an important issue which affects stability of Internet and user service experience.

At present, for distributed denial of service (DDOS) attacks, a traffic cleaning system is mainly used for cleaning attack traffic. Currently, the traffic cleaning system is centrally deployed in networks generally. For a user subjected to a DDOS attack, by deploying policy routes in specific positions in a network or guiding traffic using a border gateway protocol (BGP) mode, a traffic of the user is guided to the traffic cleaning system, and a normal service traffic of the user is returned back to the user after the attack traffic is cleaned by the traffic cleaning system.

The current traffic cleaning system has a main problem that the traffic cleaning system directly interacts with network devices, so that deployment positions of the traffic cleaning system is limited; meanwhile, because the traffic cleaning system directly interacts with the device and adopts policy routes or the BGP mode to guide traffic, complicated route planning and designs are involved, therefore it is complicated to deploy, and errors are easy to occur, thereby causing network instability.

### Summary

To solve existing technical problems, embodiments of the present disclosure mainly provide a traffic cleaning method and device, and a computer storage medium.

Embodiments of the present disclosure provide a traffic cleaning method, including:
a policy controller of a traffic cleaning system sending a traffic guide policy, which instructs a software defined network SDN controller to redirect a designated traffic to a traffic cleaner of a traffic cleaning system to conduct traffic cleaning, to the SDN controller; and
the traffic cleaner receiving the designated traffic which is uploaded by a network device according to an instruction of the SDN controller.

Embodiments of the present disclosure further provide a traffic cleaning device including a traffic cleaning system having a policy controller and a traffic cleaner;
the policy controller is configured to send an SDN controller a traffic guide policy instructing the SDN controller to redirect a designated traffic to the traffic cleaner so as to conduct traffic cleaning; and
the traffic cleaner is configured to receive the designated traffic which is uploaded by a network device according to an instruction of the SDN controller.

Embodiments of the present disclosure further provide a computer storage medium in which a computer program is stored, where the computer program is used for conducting the above-mentioned traffic cleaning method.

Embodiments of the present disclosure provide a traffic cleaning method and device, and a computer storage medium, based on which a policy controller of a traffic cleaning system sending an SDN controller a traffic guide policy instructing the SDN controller to redirect a designated traffic to a traffic cleaner of the traffic cleaning system to conduct traffic cleaning, and the traffic cleaner receiving the designated traffic which is uploaded by a network device according to the instruction of the SDN controller. A software defined network-based traffic cleaning is implemented without changing hardware deployment, network structure is simplified, and traffic cleaning efficiency is improved, thereby solving a problem of network instability caused by the existing traffic cleaning method.

### Description of the Drawings

Figure 1 is an architecture diagram showing a software defined network;
Figure 2 is an architecture diagram showing an extended software defined network;
Figure 3 is an architecture diagram showing a software defined network-based traffic cleaning system provided in embodiments of the present disclosure;
Figure 4 is a flow diagram showing a traffic cleaning method provided in embodiment 1 of the present disclosure;
Figure 5 is a service processing flow diagram showing a traffic cleaning system based on an extended architecture of a software defined network provided in embodiment 2 of the present disclosure;
Figure 6 is a structure diagram showing a traffic cleaning device provided in embodiment 3 of the present disclosure; and
Figure 7 is a flow diagram showing a traffic cleaning method provided in embodiment 4 of the present disclosure.

### Detailed Description

The current traffic cleaning system has a main problem that the traffic cleaning system directly interacts with network devices, so that deployment positions of the traffic cleaning system is limited, meanwhile, because the traffic cleaning system directly interacts with the device and adopts policy routes or the BGP mode to guide traffic, complicated route planning and designs are involved, therefore it is complicated to deploy, and errors are easy to occur, thereby causing network instability.

To solve the above-mentioned problem, embodiments of the present disclosure provide a traffic cleaning method and system. Embodiments of the present disclosure will be explained in detail below in combination with the figures. It should be explained that embodiments in the present application and features in embodiments can be mutually combined at random without conflict.

Embodiments of the present disclosure provide a traffic cleaning method and system, which are implemented based on an SDN without changing a network hardware deployment.

To facilitate understanding technical solutions provided in embodiments of the present disclosure, the SDN is briefly explained first.

The SDN implements global management and control of a network using a uniform control mode, and provides network capability invocation based on a northbound interface. Such a architecture can implement global optimization to shield network bottom-layer route planning and design details, so that it is possible to flexibly deploy the traffic cleaning system and reduce design and implementation difficulties.

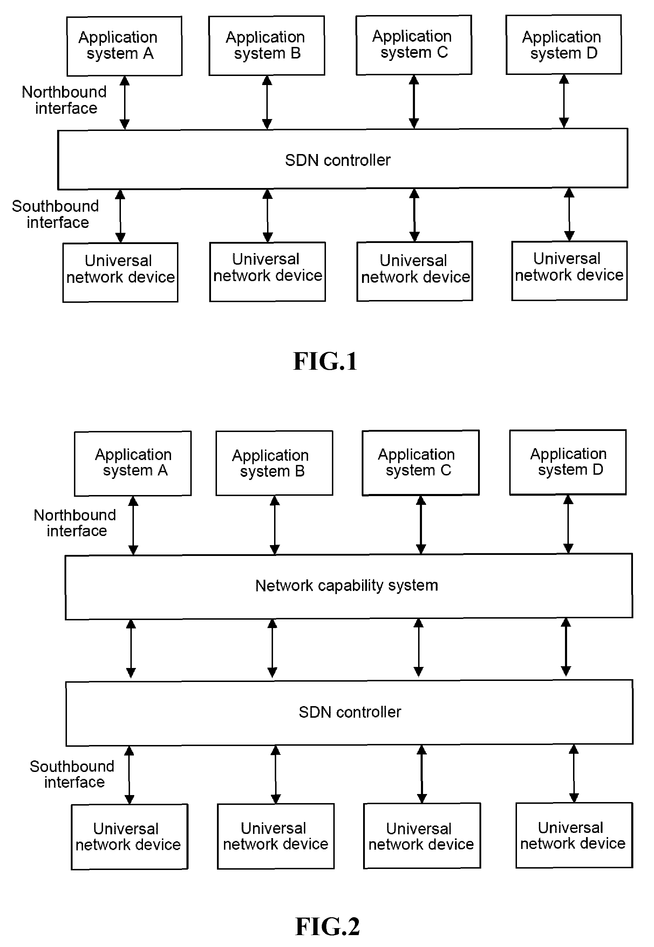

Figure 1 describes a system architecture of an SDN, and the traffic cleaning system provided in embodiments of the present disclosure is implemented based on an architecture of the software defined network. The SDN is divided into a forwarding layer, a network control layer and an application layer. The forwarding layer mainly includes a universal network device and is mainly used for implementing encapsulation and forwarding of packets; the network control layer mainly includes an SDN controller and is mainly used for conducting centralized control and management on networks, including topology collection, routing computation, state collection and maintenance, routing management, etc.; and the application layer mainly includes an upper-layer application system. The SDN controller controls network devices through a southbound interface, to collect related states and information and send corresponding control instructions and contents. Main southbound interface protocols at present include Openflow, SNMP, etc.; and the SDN controller provides network capability services and invocation for the application layer through a northbound interface.

Figure 2 describes an extended system architecture of a software defined network, and the traffic cleaning system provided in embodiments of the present disclosure also can be based on the extended system architecture of the software defined network. Since the software defined network mainly focuses on how to implement flexible definition to networks by software, network operation is insufficiently considered in the software defined network architecture, so that related standard organizations have already proposed some extended SDN system architectures.

The extended system architecture of the software defined network mainly includes a forwarding layer, a network control layer, a service control layer and an application layer. The forwarding layer mainly includes a universal network device and is mainly used for implementing encapsulation and forwarding of packets; the network control layer mainly includes an SDN controller and is mainly used for conducting centralized control and management on networks, including topology collection, routing computation, state collection and maintenance, routing management, etc. The SDN controller controls network devices through a southbound interface, to collect related states and information and send corresponding control instructions and contents, main southbound interface protocols at present include Openflow, SNMP, etc. The SDN controller provides a network basis capability invocation interface for the service control layer through a northbound interface; and the service control layer mainly includes a network capability system which is used for a network operator to conduct network capability encapsulation and abstraction and provides network capability services for upper-layer applications. The service control layer forms more abstract network capability suitable for network operation by invoking and integrating basic network functions of the network control layer, and provides network capability services for upper-layer applications through a northbound interface.

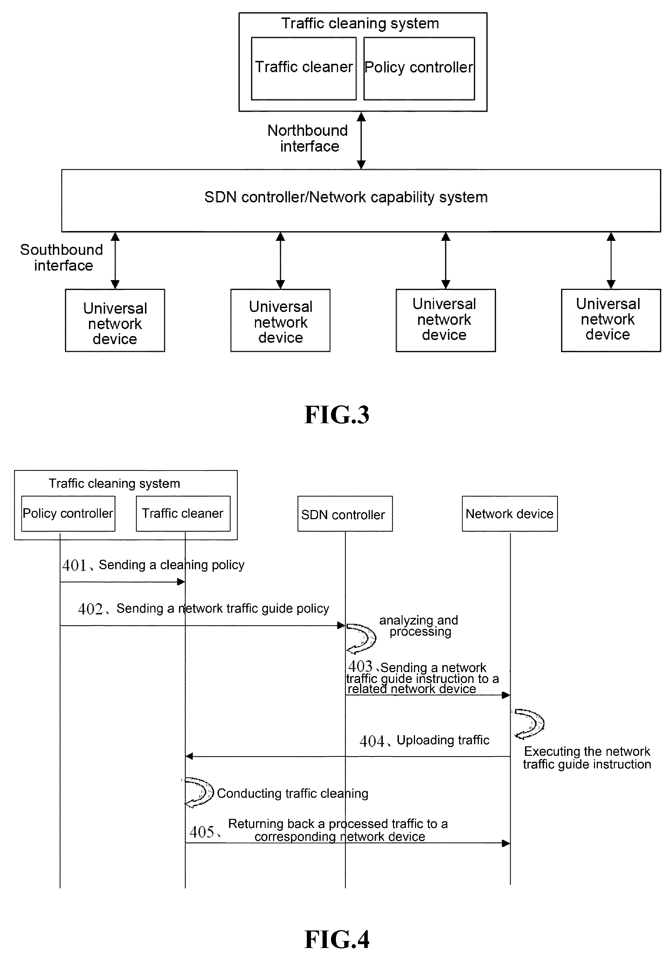

Figure 3 describes an architecture diagram of a software defined network-based traffic cleaning system provided in embodiments of the present disclosure. The traffic cleaning system mainly includes a traffic cleaner and a policy controller, where the traffic cleaner is mainly used for conducting traffic cleaning, and the policy controller is mainly used for conducting related policy control, traffic guide, etc.

The traffic cleaning system is implemented based on the architecture of the software defined network or the extended system architecture of the software defined network, and is different from an existing traffic cleaning system in that: the existing traffic cleaning system directly controls a network device, and sends a corresponding traffic guide policy to the network device, so that deployment of traffic cleaning services involves complicated routing design and deployment at device level and network level, therefore it is difficult to implement, and errors are easy to occur, thereby causing network instability.

The software defined network-based traffic cleaning system sends a network traffic guide policy to the SDN controller through the northbound interface of the SDN controller, and the SDN controller sends the network traffic guide policy to related devices uniformly after analyzing it. Since the SDN controller provides abstract interfaces to shield bottom-layer routing designs and deployment details, deployment of the traffic cleaning service is substantially simplified; and since the SDN controller has a network global control capability, deployment of the traffic cleaning service is more flexible.

The traffic cleaning system based on the extended system architecture of the software defined network sends the network traffic guide policy to a network capability system through a northbound interface of the network capability system; the network capability system receives a network traffic guide instruction and then analyses it, to form a specific control instruction may be recognized by the SDN controller, and sends the control instruction to the SDN controller through the northbound interface of the SDN controller; and the SDN controller analyses the received control instruction, and then sends it to related devices uniformly through the southbound interface of the SDN controller. Since the network capability system and the SDN controller provide abstract interfaces to shield bottom-layer routing designs and deployment details, deployment of the traffic cleaning service is substantially simplified; and since the SDN controller has a network global control capability, deployment of the traffic cleaning service is more flexible.
Embodiment 1 of the present disclosure is explained below with reference to figures.
   Figure 4 describes a service processing flow diagram of a software defined network-based traffic cleaning system in a traffic cleaning method provided in embodiments of the present disclosure. A traffic cleaning system, an SDN controller and a network device are included in this processing flow, where the traffic cleaning system includes a traffic cleaner and a policy controller. The service processing flow includes following steps.
   Step 401, when a traffic cleaning system needs to conduct cleaning on a specific traffic, a policy controller sending a cleaning policy to a traffic cleaner, to determine a service level, service policy and related parameters of the traffic required to be cleaned;
   step 402, the policy controller sending a network traffic guide policy to an SDN controller, specifically including: redirecting a traffic of which a destination IP address is 1.1.1.1 to the traffic cleaner;
   step 403, the SDN controller receiving the network traffic guide policy and then analyzing and processing it, to convert it into a network traffic guide instruction may be recognized and executed by a network device and may be sent through a southbound interface of the SDN controller, the network traffic guide instruction includes an ACL, a redirection routing table, a forwarding flow table, etc.; and sending the network traffic guide instruction to a related network device through the southbound interface of the SDN controller;
   step 404, after receiving the network traffic guide instruction sent by the SDN controller, the network device executing an operation of the instruction, to upload a designated traffic in the network traffic guide instruction to the traffic cleaner; and
   step 405, the traffic cleaner conducting traffic cleaning according to a set policy; and returning back a legitimate traffic to a corresponding network device after the traffic cleaning is completed.
Embodiment 2 of the present disclosure is explained below with reference to figures.

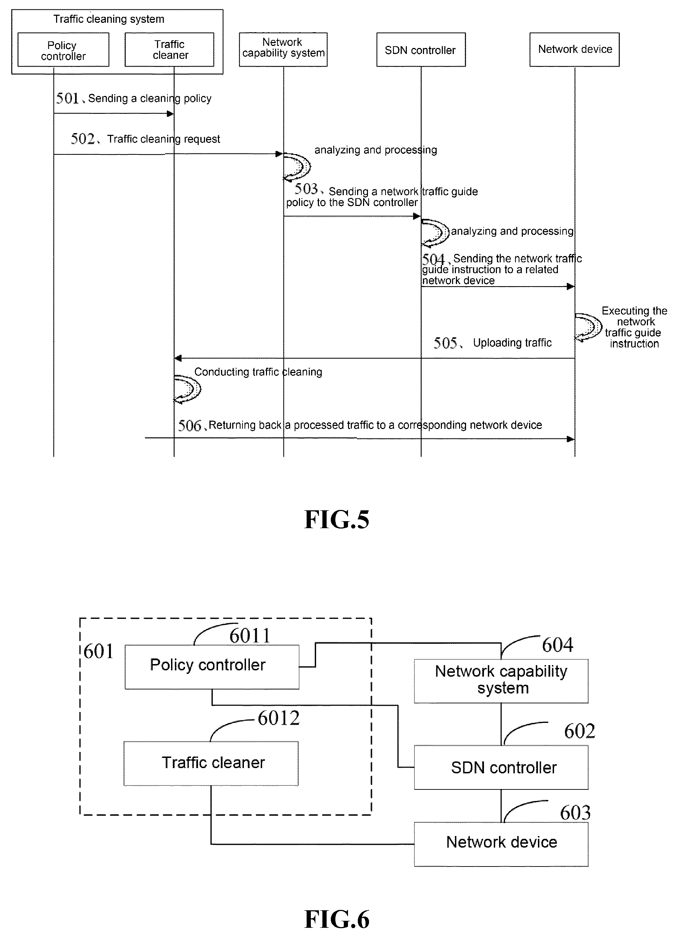

   Figure 5 describes a service processing flow diagram of a traffic cleaning system based on an extended architecture of a software defined network in a traffic cleaning method provided in embodiments of the present disclosure. A traffic cleaning system, a network capability system, an SDN controller and a network device are included in this processing flow, where the traffic cleaning system includes a traffic cleaner and a policy controller. The service processing flow includes following steps.
   Step 501, when a traffic cleaning system needs to conduct cleaning on a specific traffic, a policy controller sending a cleaning policy to a traffic cleaner, to determine a service level, service policy and related parameters of the traffic required to be cleaned;
   step 502, the policy controller sending a traffic cleaning request to a network capability system, where the traffic cleaning request at this level focuses on description of service requirements, which is relatively abstract, the network traffic guide policy may be specifically represented as: a traffic cleaning service is required by a user A, service level is diamond level, and service duration is 12 hours, etc.;
   step 503, after receiving the traffic cleaning request, the network capability system analyzing it, to convert the traffic cleaning request into a corresponding network traffic guide policy, and sending the network traffic guide policy to the SDN controller through a northbound interface of the SDN controller, the specific network traffic guide policy may be represented as: redirecting a traffic with a destination IP address 1.1.1.1 to the traffic cleaner;
   step 504, after receiving the network traffic guide policy, the SDN controller analyzing and processing it, to convert it into a network traffic guide instruction may be recognized and executed by a network device and may be sent through a southbound interface of the SDN controller, the network traffic guide instruction includes an ACL, a redirection routing table, a forwarding flow table, etc.; and sending the network traffic guide instruction to a related network device through the southbound interface of the SDN controller;
   step 505, after receiving the network traffic guide instruction sent by the SDN controller, the network device executing an operation of the instruction, to upload a designated traffic in the network traffic guide instruction to the traffic cleaner; and
   step 506, the traffic cleaner conducting traffic cleaning according to a set policy; and returning back a legitimate traffic to a corresponding network device after the traffic cleaning is completed.

   It should be explained that marking a source of a traffic required to be cleaned based on a destination IP address is only a specific implementation mode. In practical application, the traffic can also be marked in a plurality of modes such as MAC address, Ethernet type port number, combination type, etc. No matter what kind of mode is adopted to mark the traffic, implementation principles of a traffic guide process are the same as those described in embodiments of the present disclosure, which will not be repeated herein in details.
Embodiment 3 of the present disclosure is explained below with reference to figures.
   Embodiments of the present disclosure provide a traffic cleaning device. The device has a structure as shown in Figure 6, and includes a traffic cleaning system 601 including a policy controller 6011 and a traffic cleaner 6012.
   Preferably, the device further includes an SDN controller 602, at least one network device 603 and a network capability system 604.
   The policy controller 6011 is configured to send a traffic guide policy to the SDN controller 602, to instruct the SDN controller 602 to redirect a designated traffic to the traffic cleaner 6012 so as to conduct traffic cleaning; and
   the traffic cleaner 6012 is configured to receive the designated traffic which is uploaded by the network device 603 according to the instruction of the SDN controller 602.
   The policy controller 6011 is specifically configured to send a traffic cleaning request to the network capability system 604 through a northbound interface of the network capability system 604; and
   the network capability system 604 is configured to analyse the traffic cleaning request into a traffic guide policy, and send the traffic guide policy to the SDN controller 602 through the northbound interface of the SDN controller 602.
   Preferably, the policy controller 6011 is specifically configured to generate a traffic guide policy and send it directly to the SDN controller 602.
   Preferably, the SDN controller 602 is configured to analyse the traffic guide policy to obtain a network traffic guide instruction may be recognized and executed by the network device 603, and send the network traffic guide instruction to the network device 603 through a southbound interface of the SDN controller 602, to instruct the network device 603 to upload the designated traffic to the traffic cleaner 6012.
   Specifically, the traffic cleaner 6012 is further configured to conduct cleaning on the traffic according to a set cleaning policy, and return back a legitimate traffic to the network device 603 after the cleaning is completed.
   Specifically, the policy controller 6011 is further configured to send the cleaning policy to the traffic cleaner 6012 when it is judged that traffic cleaning is required to be conducted on the designated traffic, to determine a service level, service policy and related parameters of the traffic required to be cleaned.
Embodiment 4 of the present disclosure is explained below with reference to figures.

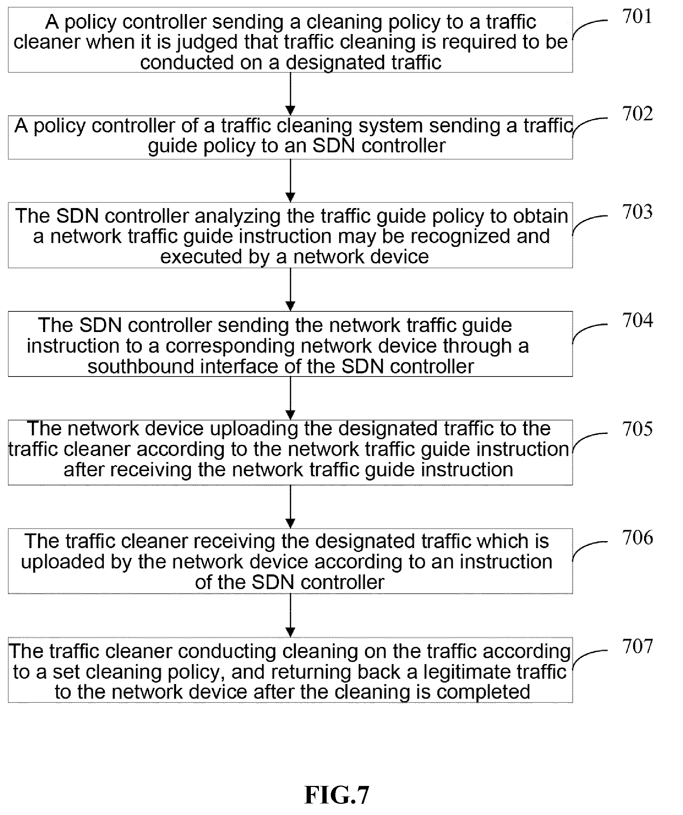

In combination with the traffic cleaning device shown in figure 6, embodiments of the present disclosure further provide a traffic cleaning method. A flow of completing traffic cleaning using the method is as shown in Figure 7, the flow includes:
step 701, the policy controller sending a cleaning policy to the traffic cleaner when it is judged that traffic cleaning is required to be conducted on a designated traffic, to determine a service level, service policy and related parameters of the traffic required to be cleaned;
step 702, the policy controller of the traffic cleaning system sending the traffic guide policy to the SDN controller;
where the traffic guide policy contains a destination IP address, MAC address, Ethernet type port number or combination types of different identifiers, which has a purpose of determining the traffic required to be cleaned; and in this step, the traffic guide policy carries information instructing the SDN controller to redirect the designated traffic to the traffic cleaner of the traffic cleaning system to conduct traffic cleaning.

This step specifically includes following two cases:
case 1: the policy controller sending a traffic cleaning request to a network capability system through a northbound interface of the network capability system, and the network capability system analyzing the traffic cleaning request into a traffic guide policy and sending the traffic guide policy to the SDN controller through a northbound interface of the SDN controller; and
case 2: the policy controller generating a traffic guide policy and sending it directly to the SDN controller.

Step 703, the SDN controller analyzing the traffic guide policy to obtain a network traffic guide instruction may be recognized and executed by a network device;
where the network traffic guide instruction includes any one or more of the following:
an ACL, redirection routing table and forwarding flow table;
step 704, the SDN controller sending the network traffic guide instruction to a corresponding network device through a southbound interface of the SDN controller, to instruct the network device to upload the designated traffic to the traffic cleaner;
step 705, after receiving the network traffic guide instruction, the network device uploading the designated traffic to the traffic cleaner according to the network traffic guide instruction;
step 706, the traffic cleaner receiving the designated traffic which is uploaded by the network device according to the instruction of the SDN controller; and
step 707, the traffic cleaner conducting cleaning on the traffic according to a set cleaning policy, and returning back a legitimate traffic to the network device after the cleaning is completed.

Embodiments of the present disclosure provide a traffic cleaning method and device based on which a policy controller of a traffic cleaning system sending an SDN controller a traffic guide policy instructing the SDN controller to redirect a traffic to a traffic cleaner of the traffic cleaning system to conduct traffic cleaning, and the traffic cleaner receiving the traffic which is uploaded by a network device according to the instruction of the SDN controller. A software defined network-based traffic cleaning is implemented without changing hardware deployment, network structure is simplified, and traffic cleaning efficiency is improved, thereby solving a problem of network instability caused by the existing traffic cleaning method.

The traffic cleaning system can be implemented based on the architecture of the software defined network, and can be implemented based on the extended architecture of the software defined network as well. The traffic cleaning system implements interaction and control of the network in a mode of interacting with the SDN controller or a mode of interacting with the network capability system, so that a large number of network bottom-layer details can be shielded, thereby avoiding involving a large number of route planning, designs and implementation in the process of traffic cleaning service deployment, and avoiding network shock and instability probably caused thereby. Meanwhile, deployment of the traffic cleaning system implemented in an SDN-based mode is more flexible, so that adaptability of the system is improved.

Those skilled in the art can understand that all or some steps of the above-mentioned embodiments can be implemented using a computer program flow, the computer program can be stored in a computer readable storage medium, and the computer program is executed on a corresponding hardware platform (such as system, equipment, apparatus, device, etc.), the execution including one of the steps of a method embodiment or a combination thereof.

Optionally, all or some steps of the above-mentioned embodiments can be implemented using integrated circuits as well, and these steps can be implemented by the steps of respectively manufacturing the integrated circuits into various integrated circuit modules or the steps of manufacturing a plurality of modules thereof into single integrated circuit modules. In this way, the present disclosure is not limited to any specific hardware and software combination.

Various devices/function modules/function units in the above-mentioned embodiments can be implemented using universal devices, and they can be centralized on a single computation device and can be distributed on a network formed by a plurality of computation devices as well.

Various devices/function modules/function units in the above-mentioned embodiments can be implemented in the form of software function modules, and can be stored in a computer readable storage medium when being sold or used as independent products. The above-mentioned computer readable storage medium may be a read-only memory, a disk or compact disc, etc.

Accordingly, embodiments of the present disclosure further provide a computer storage medium, where a computer program is stored in the computer storage medium, the computer program being used for conducting the above-mentioned traffic cleaning method.

Anyone of those skilled in the art familiar with the prior art can easily think of changes or replacement within the technical scope disclosed in the present disclosure, which should be covered within the protection scope of the present disclosure. Therefore, the protection scope of the present disclosure should be determined by the protection scope of the claims.

## Claims

1. A traffic cleaning method, comprising:
sending, by a policy controller of a traffic cleaning system, a traffic guide policy to a software defined network SDN controller, wherein the traffic guide policy instructs the SDN controller to redirect a designated traffic to a traffic cleaner of a traffic cleaning system to conduct traffic cleaning; and
receiving, by the traffic cleaner, the designated traffic which is uploaded by a network device according to an instruction of the SDN controller.

2. The traffic cleaning method of claim 1, wherein sending, by the policy controller of the traffic cleaning system, the traffic guide policy to the SDN controller comprises:
sending, by the policy controller, a traffic cleaning request to a network capability system through a northbound interface of the network capability system; and
analyzing, by the network capability system, the traffic cleaning request into a traffic guide policy, and sending the traffic guide policy to the SDN controller through a northbound interface of the SDN controller.

3. The traffic cleaning method of claim 1, wherein sending, by the policy controller of the traffic cleaning system, the traffic guide policy to the SDN controller comprises:
generating, by the policy controller, a traffic guide policy and directly sending the traffic guide policy to the SDN controller.

4. The traffic cleaning method of claim 1, after the policy controller of the traffic cleaning system sends the traffic guide policy to the SDN controller, further comprising:
analyzing, by the SDN controller, the traffic guide policy to obtain a network traffic guide instruction capable of being recognized and executed by a network device;
sending, by the SDN controller, the network traffic guide instruction to a corresponding network device through a southbound interface of the SDN controller, to instruct the network device to upload the designated traffic to the traffic cleaner; and
uploading, by the network device after receiving the network traffic guide instruction, the designated traffic to the traffic cleaner according to the network traffic guide instruction.

5. The traffic cleaning method of claim 4, after the traffic cleaner receives the designated traffic which is uploaded by the network device according to the instruction of the SDN controller, further comprising:
conducting, by the traffic cleaner, cleaning on the traffic according to a set cleaning policy, and returning back a legitimate traffic to the network device after the cleaning is completed.

6. The traffic cleaning method of claim 1, before the policy controller of the traffic cleaning system sends the traffic guide policy to the SDN controller, further comprising:
sending, by the policy controller, the cleaning policy to the traffic cleaner when it is judged that traffic cleaning is required to be conducted on the designated traffic, to determine a service level, service policy and related parameters of the traffic required to be cleaned.

7. A traffic cleaning device, comprising a traffic cleaning system including a policy controller and a traffic cleaner; wherein
the policy controller is configured to send an SDN controller a traffic guide policy instructing the SDN controller to redirect a designated traffic to the traffic cleaner so as to conduct traffic cleaning; and
the traffic cleaner is configured to receive the designated traffic which is uploaded by a network device according to an instruction of the SDN controller.

8. The traffic cleaning device of claim 7, further comprising a network capability system; wherein
the policy controller is configured to send a traffic cleaning request to the network capability system through a northbound interface of the network capability system; and
the network capability system is configured to analyse the traffic cleaning request into a traffic guide policy, and send the traffic guide policy to the SDN controller through a northbound interface of the SDN controller.

9. The traffic cleaning device of claim 7, wherein the policy controller is configured to generate a traffic guide policy and directly send the traffic guide policy to the SDN controller.

10. The traffic cleaning device of claim 8 or 9, further comprising an SDN controller; wherein
the SDN controller is configured to analyse the traffic guide policy to obtain a network traffic guide instruction capable of being recognized and executed by a network device, and send the network traffic guide instruction to the network device through a southbound interface of the SDN controller, to instruct the network device to upload the designated traffic to the traffic cleaner.

11. The traffic cleaning device of claim 7, wherein
the traffic cleaner is further configured to conduct cleaning on the traffic according to a set cleaning policy, and return back a legitimate traffic to the network device after the cleaning is completed.

12. The traffic cleaning device of claim 7, wherein
the policy controller is further configured to send the cleaning policy to the traffic cleaner when it is judged that traffic cleaning is required to be conducted on the designated traffic, to determine a service level, service policy and related parameters of the traffic required to be cleaned.

13. A computer storage medium in which a computer program is stored, wherein the computer program is used for conducting the traffic cleaning method of any of claims 1-6.
